# EUROPEAN PATENT APPLICATION

(11) **EP 4 170 412 A1**
(43) Date of publication of application: **26.04.2023**
(21) Application number: 20941252.7
(22) Date of filing: 19.06.2020
(51) Int. Cl.: G02B 27/01, G02B 6/124

(54) **OPTICAL DEVICE, DISPLAY APPARATUS, AND LIGHT-OUTPUTTING AND IMAGE-DISPLAYING METHOD THEREOF**

(71) Applicant: Shenzhen Optiark Semiconductor Technologies Limited, Shenzhen, Guangdong 518111 (CN)
(72) Inventor: LEVOLA, Tapani Kalervo, Shenzhen, Guangdong 518111 (CN); JIANG, Houqiang, Shenzhen, Guangdong 518000 (CN); ZHU, Yisheng, Shenzhen, Guangdong 518001 (CN)
(74) Representative: Sun, Yiming
(86) International application number: PCT/CN2020/097051
(87) International publication number: WO 2021/253385

(57) **Abstract**

Disclosure are an optical device (10), a display apparatus (500), and a light-outputting and image-displaying method thereof. The optical device (10) comprises: a diffraction entrance pupil unit (202) to form first guided light (B1) and second guided light (B2); a diffraction pupil expansion unit (203) to form third guided light (B3); a diffraction exit pupil unit (204) to form first output light (OB3); and a bypass unit (205) to form fourth guided light (B4); wherein an included angle between a first direction (301) of the first guided light (B1) and a second direction (302) of the second guided light (B2) is in the range of 60° to 120°; wherein the diffraction exit pupil unit (204) comprises one or more enhancement regions (401 and 402) to form auxiliary output light (AUX3). The optical device can improve the uniformity of intensity distribution of output light well.

## Description

### TECHNICAL FIELD

The present disclosure relates to the technical field of optical devices, and particularly relates to an optical device, a display apparatus and a light-outputting and image-displaying method thereof.

### BACKGROUND

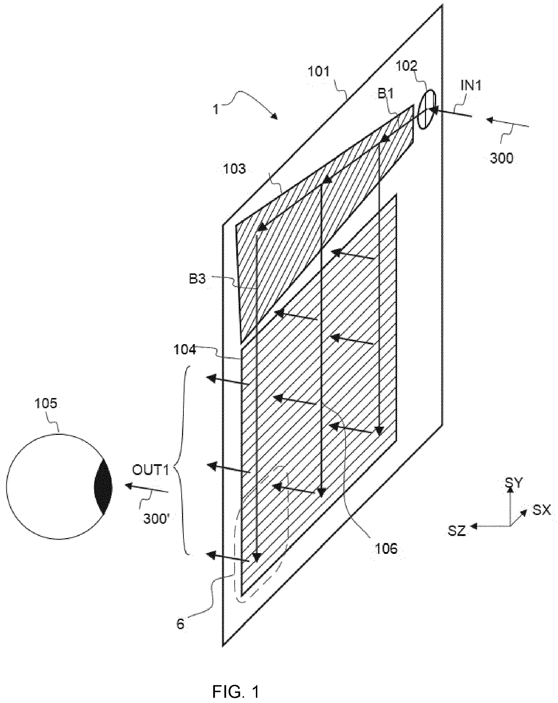

Referring to FIG. 1, a pupil expansion device 1 includes a waveguide plate 101, the waveguide plate further includes a diffraction entrance pupil unit 102, a diffraction pupil expansion unit 103 and a diffraction exit pupil unit 104. An input light beam IN1 is expanded in the pupil expansion device 1 by multiple diffraction and finally a light beam OUT1 is output. The diffraction entrance pupil unit 102 diffracts the input light IN1 into first guided light B1 by diffraction. The first guided light B1 is diffracted by the pupil expansion unit 103 to form expanded guided light B3. The diffused guided light B3 is diffracted and output as light OUT1 by the diffraction exit pupil unit 104.

The pupil expansion device 1 can expand the light beam both in a direction SX and in a direction SY. The width of the output light beam OUT1 is much greater than the width of the input light beam IN1. The pupil expansion device 1 may be used to expand the viewing pupil of a virtual display apparatus so that an eye 105 has a greater comfortable viewing position (a large eyebox) relative to the viewing position of the virtual display apparatus. The eye 105 of a viewer can see a completed virtual image within the viewing position of the output light beam. The output light may include one or more output light beams, wherein each output light beam may correspond to different image positions of the displayed virtual image. The pupil expansion device may also be referred to as, for example, an expansion device, an expansion device, etc.

The intensity of the guided light (B1, B3) propagating in the waveguide plate 101 decreases with increase of its propagation path length in the pupil expansion device 103. At the same time, the guided light undergoes independent diffraction many times in the pupil expansion unit 103, the number of diffraction is proportionality to the propagation distance. Since a light path from the entrance pupil unit 102 to the corner region 6 is longer, the output intensity of the farthest (leftmost) corner region 6 may be lower. Furthermore, the pupil expansion unit 103 will also further reduce the exit light intensity.

Thus, the intensity of the output light at the furthest corner region 6 of the diffraction exit pupil unit 104 will be much lower than the intensity of the output light at the center 106 of the diffraction exit pupil unit 104. Finally, it results in that the spatial intensity distribution of the output light of the pupil expansion device 1 in FIG. 1 may be nonuniform.

### SUMMARY

In order to overcome the defects described in the prior art, the present disclosure provides an optical device, a display apparatus and a light-outputting and image-displaying method thereof in order to solve the described problems proposed in the background art.

The technical solution used by the present disclosure for solving the problems in the prior art is an optical device, including:
a waveguide plate which includes:
a diffraction entrance pupil unit to form first guided light and second guided light by diffracting input light;
a diffraction pupil expansion unit to form third guided light by diffracting the first guided light;
a diffraction exit pupil unit to form first output light by diffracting the third guided light; and
a bypass unit to form fourth guided light by diffracting the second guided light;
wherein the first guided light propagates in a first direction, the second guided light propagates in a second direction, and an included angle between the first direction and the second direction is in the range of 60° to 120°;
the diffraction exit pupil unit includes one or more enhancement regions to form auxiliary output light by diffracting the fourth guided light.

As a preferred solution of the present disclosure, the diffraction exit pupil unit includes one or more of regions, the region prevents the fourth guided light from being diffracted out of the waveguide plate.

As a preferred solution of the present disclosure, the propagation direction of the third guided light is a third direction and is substantially parallel to the second direction; wherein the propagation direction of the fourth guided light is a fourth direction and is substantially parallel to the first direction.

As a preferred solution of the present disclosure, the first enhancement region forms first output light by diffracting the third guided light, forms auxiliary output light at the same time by diffracting the fourth guided light, and forms combined output light by superimposing the auxiliary output light with the first output light.

As a preferred solution of the present disclosure, a distance between the entrance pupil unit and the bypass unit is in the range of 50% to 80% of a height of an output coupling region; a device of the second guided light between the entrance pupil unit and the pupil expansion unit, does not interact with the diffraction exit pupil unit.

As a preferred solution of the present disclosure, the diffraction exit pupil unit includes one or more reference regions which prevent the fourth guided light from being diffracted out of the waveguide plate, wherein the total area of the reference region is between 30% and 95% of the area of the exit pupil unit.

As a preferred solution of the present disclosure, at least a part of the fourth guided light directly propagates from the bypass unit to the first enhancement region without passing through the reference region, without making the fourth guided light be diffracted from the waveguide plate.

A display apparatus, including an optical engine to form a main image and convert the main image into multiple input light beams, the apparatus includes any one of the optical device as described above in the present disclosure and forms an output light beam by diffracting and expanding the input light beam.

A method, comprising using any one of the devices as described above to provide output light, is a preferred solution of the present disclosure.

A method, comprising using the optical device to display an image.

Compared with the prior art, the present disclosure has the technical effects as follows:
an optical device, a display apparatus and a light-outputting and image-displaying method thereof in the present disclosure is provided, the optical device can improve the uniformity of intensity distribution of output light well.

### BRIEF DESCRIPTION OF THE DRAWINGS

FIG. 1 is a related case, an optical pupil expansion device;
FIG. 2 shows a front view of the pupil expansion device of the present disclosure, the pupil expansion device including a bypass unit coupling light to an enhancement region;
FIG. 3 shows a three-dimensional view of the pupil expansion device;
FIG. 4 shows a cross-sectional side view of the pupil expansion device, including a display apparatus matched with the pupil expansion device;
FIG. 5 in a mode of examples, combines first output light with auxiliary output light in a three-dimensional view to form final output light; and
FIG. 6 shows a front view of the pupil expansion device of the present disclosure, in which relevant sizes and structural details are labeled.

### DETAILED DESCRIPTION

The specific implementations of the present disclosure will be further described below in combination with the accompanying drawings. It should be noted that, the description of these implementations is intended to help understand the present disclosure, but does not constitute a limitation on the present disclosure. Furthermore, the technical features involved in the implementations of the present disclosure described below can be combined with each other as long as they do not conflict with each other.

An optical device of the present application, i.e., a pupil expansion device 2, may include a planar waveguide plate 201 with good planeness, which further includes a first optical diffraction entrance pupil unit 202, a second optical diffraction pupil expansion unit 203, a third optical diffraction exit pupil unit 204 and a fourth optical diffraction bypass unit 205.

The entrance pupil unit 202 may receive an input light beam IN1, while the exit pupil unit 204 may provide an expanded output light beam OUT1 such that the length and width of the output light beam OUT1 are greater than the length and width of the input light beam IN1.

The pupil expansion device 2 may expand the light beam IN1 in two dimensions (for example, in the horizontal direction SX and in the vertical direction SY). The expansion process may also be referred to as exit pupil expansion, light ray expansion, etc. The pupil expansion device 2 may be referred to as a light beam expander or an exit pupil expander or the like.

The entrance pupil unit 202 may be used as a coupling unit. The entrance pupil unit 202 may form first guided light B1 and second guided light B2 by diffracting the input light IN1. The first guided light B1 and the second guided light B2 may propagate within the planar waveguide plate 201. The first guided light B1 and the second guided light B2 may be confined to perform Total Internal Reflection within the planar waveguide plate 201.

The term "guide" may mean that the light propagates inside the planar waveguide plate 201, confining light ray within the plate by total internal reflection (TIR). The term "waveguide" may be the same as the term "optical waveguide".

The first guided light B1 and the second guided light B2 may have the same wavelength λ0. The first unit 202 may couple the input light IN1 to two different paths, namely through a main path and a bypass path, propagating to the diffraction exit pupil unit 204.

The light ray passing through the entrance pupil unit 202 may be coupled to the exit pupil unit 204 through the pupil expansion unit 203. The pupil expansion device 2 may provide the main path from the unit 202 to the unit 204 via the unit 203.

The entrance pupil unit 202 may also couple the light ray to the exit pupil unit 204 through the bypass unit 205. The pupil expansion device 2 may provide the bypass path from the unit 202 to the unit 204 via the unit 205.

The second unit 203 may be used as a diffraction pupil expansion unit. First, the first guided light B1 may be guided from the diffraction entrance pupil unit 202 to the pupil expansion unit 203, the direction being a first direction 301. The pupil expansion unit 203 may form expanded third guided light B3 by diffracting the first guided light B1. The expanded guided light B3 may propagate from the diffraction pupil expansion unit 203 to the exit pupil unit 204. The expanded guided light B3 may be confined to propagate in the waveguide plate 201 by total internal reflection. In this embodiment, the diffraction pupil expansion unit 203 may distribute the guided light B3 nearly uniformly to the entire region of the diffraction exit pupil unit 204.

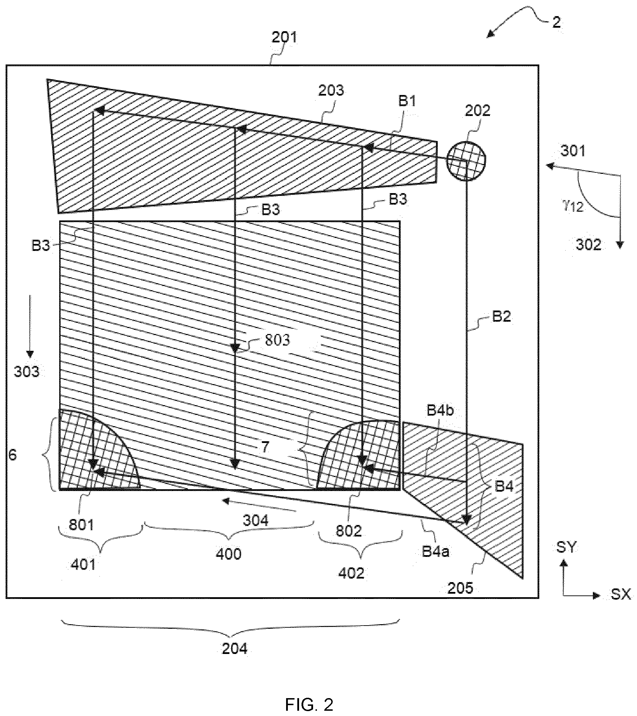

The third unit 204 may be used as a diffraction exit pupil unit. As shown in FIG. 2-FIG. 5, the exit pupil unit 204 may diffract the expanded guided light B3 to form output light OB3.

The fourth unit 205 may be used as a bypass unit. The second guided light B2 may be propagated from the entrance pupil unit 202 to the bypass unit 205, the direction being a second direction 302.

The first direction 301 represents the average propagation direction of the guided light B1. The direction 301 may also represent the central axis of propagation of the guided light B1.

The second direction 302 represents the average propagation direction of the guided light B2. The direction 302 may also represent the central axis of propagation of the guided light B2.

An angle γ12 is an included angle between the first direction 301 and the second direction 302 and may be in the range of 60° to 120°.

The bypass unit 205 forms guided auxiliary light B4 by diffracting the second guided light B2. The guided auxiliary light B4 may be confined to propagate in the waveguide plate 201 by total internal reflection. The guided auxiliary light B4 includes fifth guided light B4a and sixth guided light B4b. The diffraction exit pupil unit 204 may include one or more enhancement regions 401 and 402. The one or more enhancement regions 401 and 402 may couple the guided auxiliary light B4 out of the waveguide plate 201 by diffraction. The one or more enhancement regions 401 and 402 may form output enhancement light AUX3 by diffracting the guided auxiliary light B4.

The first enhancement region (401 or 402) may diffract the guided light B3 received from the pupil expansion unit 204 and the first enhancement region, and may also simultaneously diffract the guided light B4 received from the bypass unit 204.

The expanded guided light B3 may propagate in a third direction 303, and the third direction 303 may be, for example, a direction substantially parallel to the second direction 302. The auxiliary light B4 may propagate in a fourth direction 304, and the fourth direction 304 may be, for example, a direction substantially parallel to the first direction 301.

The main path represents a light path from the entrance pupil unit 202 to the exit pupil unit 204 via the pupil expansion unit 203.

The bypass path refers to a light path from the entrance pupil unit 202 to the enhancement region 401 or 402 via the bypass unit 205.

In one embodiment, the pupil expansion device 2 may make the second guided light B2 propagate not via the diffraction exit pupil unit 204.

The exit pupil unit 204 may include one or more of reference regions 400, and the reference region 400 prevents the fourth guided light B4 from being diffracted out of the waveguide plate 201. The total area of the reference region 400 may be in the range of 30% to 95% of the area of the exit pupil unit 204.

The exit pupil unit 204 may include a reference region 400 and one or more enhancement regions 401 and 402. The reference region 400 forms first output light OB3 by diffracting the guided light B3. The enhancement regions 401 and 402 may form the first output light OB3 by diffracting the guided light B3, and the enhancement regions 401 and 402 may provide the auxiliary light AUX3 for auxiliary output by diffracting the guided light B4. The reference region 400 may also be referred to as a normal exit pupil region or a first exit pupil region.

In one embodiment, at least a part of the fourth guided light B4, such as the fifth guided light B4a, may be guided from the bypass unit 205 to the first enhancement region 401 without passing through the reference region 400. Another part of the fourth guided light B4, such as the six guided light B4b, may propagate from the bypass unit 205 to the adjacent second enhancement region 402. The reference region 400 is in the exit pupil unit 204 and cannot diffract the fourth guided light B4 out of the waveguide plate 201.

SX, SY and SZ represent orthogonal directions. The waveguide plate 201 is parallel to the plane defined by the directions SX and SY.

801 represents the position of a first corner region 6 in the diffraction exit pupil unit 204. Compared with the other corner regions of the diffraction exit pupil unit 204, the first corner region 6 may be a corner region of the longest path length starting from the diffraction entrance pupil unit 202. 802 represents the position of a second corner region 7 in the diffraction exit pupil unit 204. The second corner region 7 is closest to the bypass unit 205. 803 may represent the center position of the exit pupil unit 204.

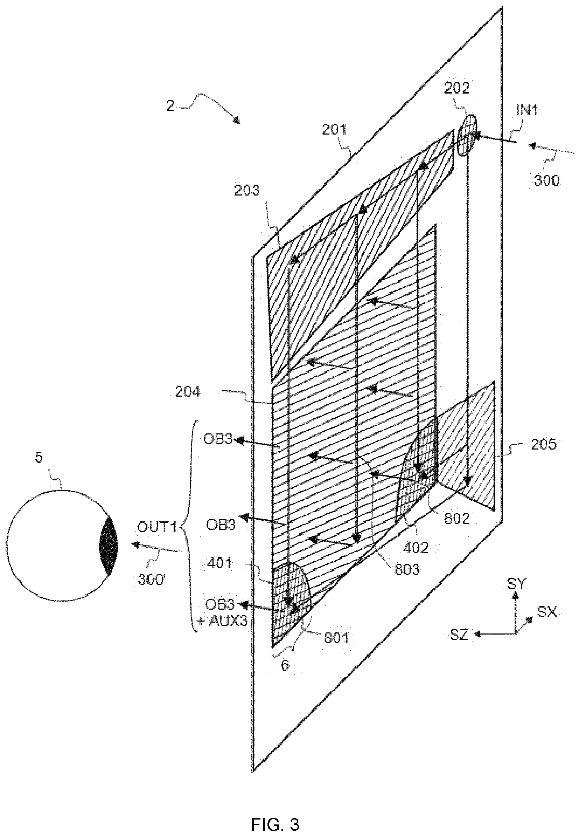

Referring to FIG. 3, the pupil expansion device 2 includes one or more enhancement regions 401 and 402 and a bypass unit 205 to improve and optimize the uniformity of the spatial intensity distribution of the output light beam OUT1. For example, the bypass unit 205 and the enhancement regions 401 and 402 may provide the auxiliary light AUX3 such that the intensity of the output light beam OUT1 at the position of the furthest corner region 6 of the diffraction exit pupil unit 204 may be substantially equal to the intensity of the output light beam OUT1 at the center 803 of the unit 204. An optical path length from the diffraction entrance pupil unit 202 to the corner region 6 is longest.

The pupil expansion device 2 may optimize the output light beam OUT1 such that a light intensity (1801) of the output light beam OUT1 at a first horizontal position (801) is substantially equal to an intensity (I803) of the output light beam OUT1 at a second horizontal position (803). The relative difference (I803-I801)/I803 needs to be less than 30%, preferably less than 10%. The first horizontal position 801 is in the corner region 6. The second horizontal position 803 is in the center of the exit pupil unit 204.

The input light beam IN1 has a propagation direction 300. The input light beam IN1 may correspond to a point on a displayed image. The pupil expansion device 2 may convert the light of the input light beam IN1 into the output light beam OUT1 such that the output light beam OUT1 has a propagation direction 300'. After converting the input light beam IN1 of light into the output light beam OUT1 by the pupil expansion device 2, the direction 300' is parallel to the direction 300. The period (d) and the direction (β) of respective diffraction gratings of the units 202, 203 and 204 are well designed such that the direction 300 of the output light beam OUT1 is parallel to the direction 300 of the input light beam IN1.

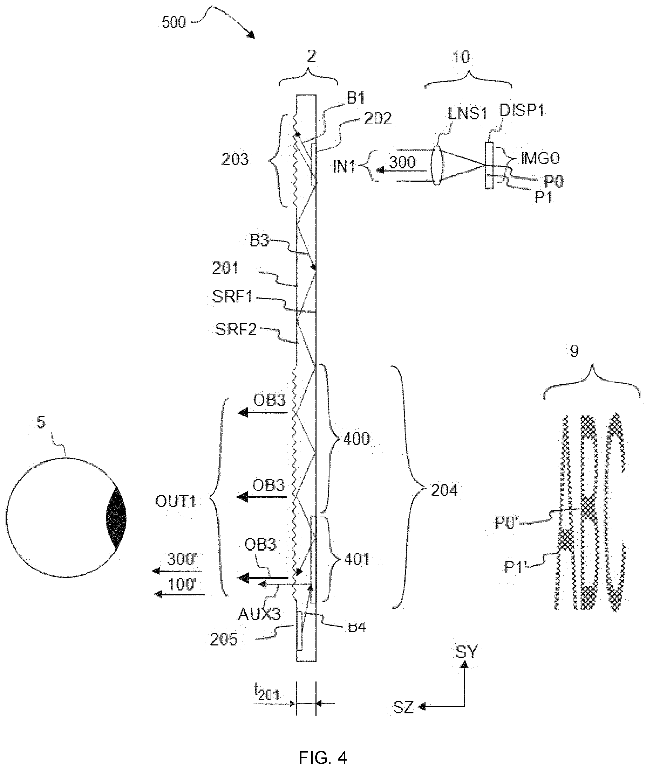

Referring to FIG. 4, a display apparatus 500 includes a pupil expansion device 2 and an optical engine 10. The display apparatus 500 includes an optical engine 10, and the optical engine 10 provides a main image IMG0 and converts the main image IMG0 into multiple light beams IN1 of input light. Light emitted by the optical engine 10 is incident into the diffraction entrance pupil unit 202 of the pupil expansion device 2. The plurality of light beams IN1 of input light enter the pupil expansion device 2 by diffraction of the diffraction entrance pupil unit 202. The display apparatus 500 is a display apparatus for displaying virtual images, or a near-eye optical display apparatus.

The pupil expansion device 2 may guide virtual image content from the optical engine 10 to the front of a user's eye 5. The pupil expansion device 2 can expand the viewing pupil, thereby enlarging the eyebox.

The optical engine 10 may include a microdisplay DISP1 to produce a main image IMG0. On the microdisplay DISP1, a light-emitting pixel of a two-dimensional array type may be included. The display DISP1 may be, for example, the main image IMG0 generated with a resolution of 1920x1080 (full high definition). The display DISP1 may generate a main image IMG0 for example at a resolution of 3840x2160 (4K UHD). The main image IMG0 may include a plurality of image points P0 and P1. The optical engine 10 may include a collimating optical device LNS1 to form a light beam different from each image pixel. A light beam from the image point P0 of light passes through the collimating optical device LNS1 of the optical engine 10 to form a substantially collimated light beam. The light beam propagation direction corresponding to the image point P0 is the propagation direction 300. The light beam propagation direction of the different image point P1 is different from the direction 300. The engine 10 may provide multiple light beams corresponding to the generated main image IMG0. One or more light beams provided by the optical engine 10 may be coupled to an expander EPE1 as input light IN1.

The optical engine 10 may include, for example, one or more light-emitting diodes (LED). The display DISP1 may include, for example, one or more microdisplay imagers, such as a liquid crystal on silicon (LCOS), a light crystal display (LCD), a digital mirror device (DMD), a Micro-LED display, and the like.

The first enhancement region (401 or 402) makes the first output light OB3 go out by diffracting the guided light B3 guided from the pupil expansion unit 203. The first enhancement region (401 or 402) may form a second auxiliary output light beam component AUX3 by diffracting the guided light B4 guided from the bypass unit 205. The output light OUT1 is formed in the first enhancement region (401 or 402) by superimposing the second output light beam component AUX3 with a first output light beam component OB3.

The propagation direction of the first output light beam component OB3 is the direction 300'. The propagation direction of the auxiliary output light beam component AUX3 is a direction 100'. The pupil expansion device 2 can make the direction 100' parallel to the direction 300' by designing and controlling the grating so that the first output light OB3 and the second auxiliary output light AUX3 correspond to the same beam of incident light IN1 and also correspond to the same point (e.g. P0) on the image at the same time. The output light beam OUT1 may be formed by the input light beam IN1 such that the directions 300' and 100' are parallel to the direction 300 of the input light beam IN1.

Each of the units 202, 203, 204 and 205 may contain one or more of the diffraction gratings in description.

The grating period (d), the grating direction (β) and the grating vector (V) of the optical units 202, 203, 204 and 205 can be designed such that the direction 100' of the auxiliary output light beam component AUX3 is parallel to the direction 300' of the first output light beam component OB3 by the design.

By designing the grating period (d), the grating direction (β) and the grating vector (V), it can be achieved that the sum of the grating vector of the unit 202, the grating vector of unit 205 and the grating vector of the region 401 is zero.

By designing the grating period (d), the grating direction (β) and the grating vector (V), it can be achieved that the sum of the grating vector of the unit 202, the grating vector of unit 205 and the grating vector of the region 402 is zero.

The thickness of the waveguide plate is t201. The waveguide plate includes a planar waveguide core. In one embodiment, the waveguide plate 201 may optionally include, for example, one or more plating layers, one or more protective layers, and/or one or more mechanical supporting layers. t201 refers to the thickness of the core portion of the waveguide plate 201.

The pupil expansion device 2 can expand the light beam in both the direction SX and the direction SY. The width of the output light beam OUT1 (in the direction SX) may be greater than the width of the input light beam, and the height of the output light beam OUT1 (in the direction SY) may be greater than the height of the input light beam IN1.

The pupil expansion device 2 may expand the viewing pupil of the virtual display apparatus 500 to facilitate the positioning of the eye 5, thus achieving a large viewing range. A human viewer for the virtual display apparatus 500 can see a virtual image 9 incident to the position of the viewer's eye 5 at the position of the output light OUT1. The output light OUT1 may include one or more light beams of output light, wherein, each output light beam may correspond to different image points (P0' and P1') of the virtual image. The engine 10 includes a microdisplay for displaying the main image IMG0. The optical engine 10 and the pupil expansion device 2 may convert the main image IMG0 into the displayed virtual image 9 having multiple input light beams LB1, and by forming the output light beam OUT1, since multiple input and output light beams may be included from the input light beam IN1 to the output light OUT1, each output light beam may form the different image points (P0' and P1') of the virtual image 9. The main image IMG0 may be graphs, text or video. The optical engine 10 and the pupil expansion device 2 may display the virtual image 9 such that each of the image points (P0' and P1') of the virtual image 9 corresponds to the different image points of the main image IMG0.

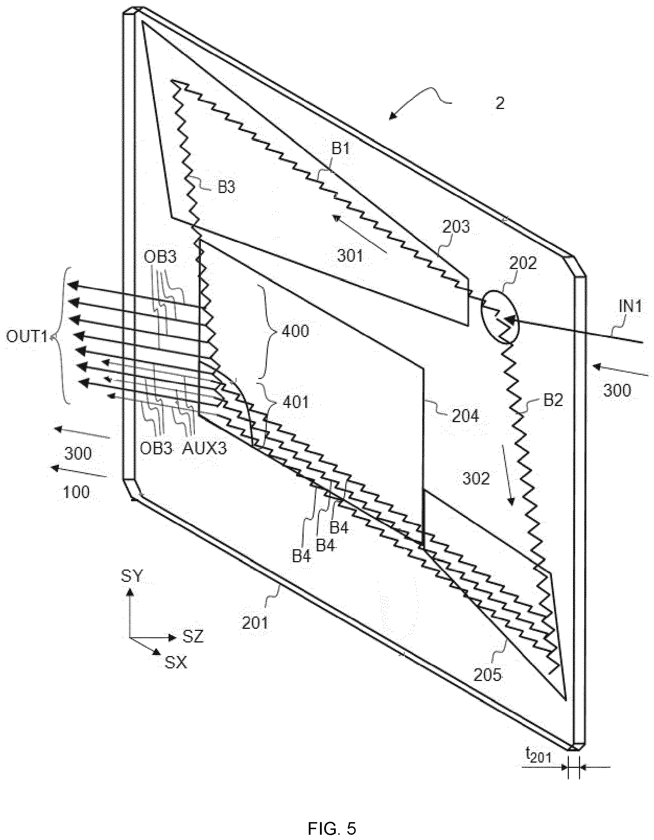

FIG. 5 shows that combined output light OUT1 is formed by superimposing the first output light OB3 with the auxiliary output light AUX3.

The enhancement region 401 may couple the guided light B3 out of the plate 201 by diffraction to form the first output light OB3. The enhancement region 401 may couple the guided light B4 out of the plate 201 by diffraction to form the auxiliary output light AUX3. The enhancement region 401 may provide the first output light OB3 and the auxiliary output light AUX3 such that the auxiliary output light AUX3 overlaps with the first output light OB3. The enhancement region 401 may combine the output light AUX3 with the first output light OB3, i.e., the auxiliary output light AUX3 overlaps with the first output light OB3. The enhancement region 401 provides final output light OUT1 by combining the auxiliary output light AUX3 and the first output light OB3.

The reference region 400 may form the first output light OB3 by diffracting the guided light B3 out of the waveguide plate 201. The reference region 400 may be designed such that the reference region 400 does not diffract the guided light B4 and thus the guided light does not go out of the waveguide plate 201.

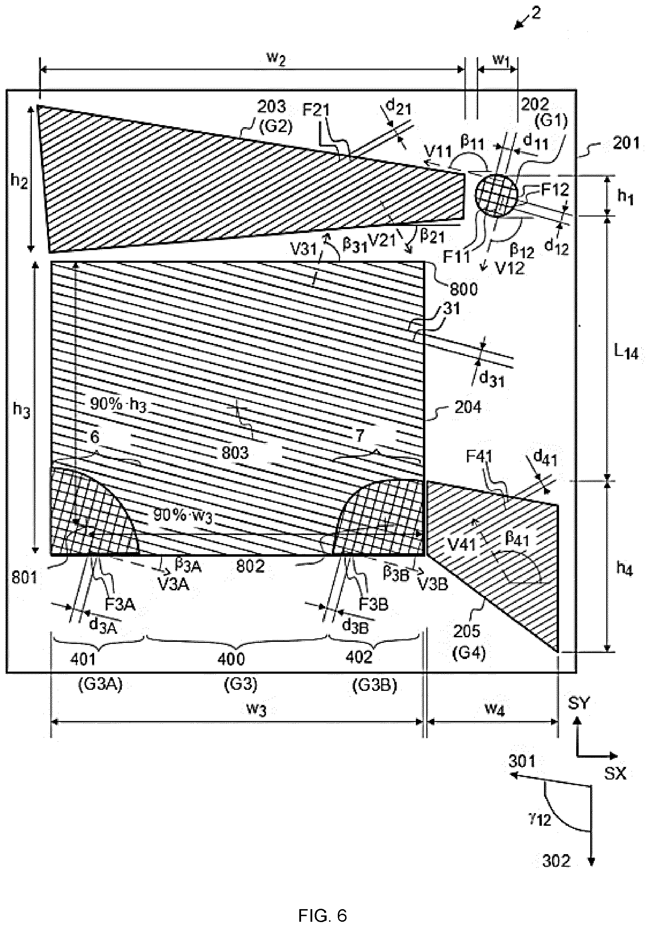

Referring to FIG. 6, each of the units 202, 203, 204 and 205 may include one or more diffraction gratings for diffracting light. For example, the unit 202 may include one or more gratings G1. For example, the unit 203 may include one or more gratings G2. For example, the unit 205 may include one grating G4. For example, the reference region 400 may include one or more gratings G3. For example, the enhancement region 401 may include one or more gratings G3A. For example, the enhancement region 402 may include one or more gratings G3B.

The diffraction grating is generally described in the way of the grating period (d), the grating direction (β) and the grating vector (V). In addition, the diffraction grating further includes a plurality of diffraction features (F) that can also be used to design and manipulate diffraction light ray. The diffraction features may be, for example, microscopic ridges or grooves, microscopic protrusions (or depressions), wherein the protrusions (or depressions) of adjacent rows may be used as diffraction lines. The grating vector (V) is defined as a vector having a direction perpendicular to the diffraction line of the diffraction grating and a size of 2π/d, wherein d is the grating period.

The diffraction entrance pupil unit 202 has grating vectors V11 and V12. The diffraction pupil expansion unit 203 has a grating vector V21. The bypass unit 205 has a grating vector V41. The reference region 400 has a grating vector V31. The enhancement region 401 has grating vectors V31 and V3A. The enhancement region 402 has grating vectors V31 and V3B. The grating vector V11 has a direction β11 and a size 2π/d11.

The grating vector V12 has a direction β12 and a size 2π/d12. The grating vector V21 has a direction β21 and a size. The grating vector V31 has a direction β31 and a size 2π/d31. The grating vector V41 has a direction β41 and a size 2π/d41. The grating vector V3A has a direction β3A and a size 2π/d3A. The grating vector V3B has a direction β3B and a size 2π/d3B. The direction (β) of the grating vector may be specified as, for example, an angle between the direction and a reference direction (e.g., the direction SX).

The grating period (d) of the optical units 202, 203, 204 and 205 and the orientation (β) of the grating vector V can be selected such that a direction 100 of the auxiliary output light beam component AUX3 is parallel to the direction 300' of the first output light beam component OB3.

The angle between the directions of the grating vectors V12 and V11 of the diffraction entrance pupil unit 202 may be for example in the range of 60° to 120°. The grating period d12 of the unit 202 may be substantially equal to the grating period d11. The grating period d12 of the unit 202 may also be equal to the grating period d11.

The grating period (d) and direction (β) of the grating vectors (V11, V21 and V31) may be designed such that for example, the vector sum of the grating vectors (V11, V21 and V31) of the units 202, 203 and 204 may be zero. Specifically, the grating vectors V11, V21 and V31 are controlled by designing the details of the grating periods d11, d21 and d31 and the directions β11, β21 and β31 such that the vector sum of the grating vectors V11, V21 and V31 is zero.

The grating period (d) and the direction (β) of the grating vector can be designed such that for example, the sum of the grating vector of the unit 202, the grating vector of the unit 205, and the grating vector of the region 401 sum is zero.

The grating vectors V12, V41 and V3A of the grating periods d12, d41 and d3A and the directions β12, β41 and β3A may be designed such that, for example, the vector sum of the grating vectors V12, V41 and V3A is zero.

The grating vector V3B may be parallel to the grating vector V3A, so that the grating period d3B may be equal to the grating period d3A.

The grating period (d) and the direction (β) of the grating vector can be designed such that, for example, the sum of the grating vector of the unit 202, the grating vector of the unit 205 and the grating vector of the region 402 is zero.

The first unit 202 may have the first grating vector V11 to form the first guided light B1 in the direction 301, and the second grating vector V12 to form the second guided light B2 in the direction 302. The first unit 202 may have a first diffraction feature F11, having a first grating period d11 and a first orientation β11 (with respect to the reference direction SX). The first unit 202 may have a second diffraction feature F12, having a second grating period d12 and a second orientation β12 (with respect to the reference direction SX). The first unit 202 may be, for example, a grating implemented by crossed gratings or by two linear gratings as shown in the figure. A first linear grating having the feature F11 may be provided on a first side of the plate 201 (e.g. on an input side SRF1) and a second linear grating having the feature F12 may be provided on a second side of the waveguide plate 201 (e.g. on an output side SRF2). The feature structure of the diffraction grating may be, for example, a microscopic ridge or a tiny protrusion.

The second unit 203 may have the first grating vector V21 such that the first guided light B1 is diffracted to form the third guided light B3. The grating G2 of the second unit 203 may have a diffraction feature F21, having a grating period d21 and an orientation β21 (with respect to the reference direction SX).

The third unit 204 may have the first grating vector V31 so that the expanded light B3 is diffracted and coupled out of the waveguide plate 201. The grating G3 of the third unit 204 may have a diffraction feature F31, having a grating period d31 and an orientation β31 (with respect to the reference direction SX).

The reference region 400 may have the first grating vector V31 such that the expanded light B3 is diffracted and coupled out of the waveguide plate 201. The grating G3A of the reference region 400 may have the diffraction feature F31 which has a grating period d31 and an orientation β31 (with respect to the reference direction SX).

In one embodiment, the diffraction exit pupil unit 204 may include one or more of reference regions 400 which do not diffract the fourth guided light B4 out of the waveguide plate 201.

In one embodiment, the region 400 may have a low or negligible diffraction efficiency to diffract the guided light B4 out of the waveguide plate 201. In one embodiment, the reference region 400 has a low or negligible output coupling efficiency for guided light propagating in the first direction 301. For example, the region 400 outputs and couples guided light propagating in the first direction 301 as emergent light in a viewing direction (300) and outputs and couples guided light propagating in the second direction 302 as emergent light in the viewing direction (300), wherein the coupling efficiency of the former is 10% or less of the coupling efficiency of the latter.

The bypass unit 205 may have a first grating vector V41 to form and produce the guided light B4 by diffracting the second guided light B2. The grating G4 of the bypass unit 205 may have a diffraction feature F41, having a grating period d41 and an orientation β41 (with respect to the reference direction SX).

The enhancement regions 401 and 402 may have a first grating vector V31 to diffract and couple the expanded light B3 out of the waveguide plate 201. The gratings of the enhancement regions 401 and 402 may have the diffraction feature F31, having the grating period d31 and an orientation β31 (with respect to the reference direction SX).

The enhancement regions 401 and 402 may have one or two different grating vectors V3A and V3B to diffract and couple the guided light B4 out of the waveguide plate 201. The grating G3A in the enhancement region 401 may have a diffraction feature F3A, having a grating period d3A and an orientation β3A (with respect to the reference direction SX). The grating G3B in the enhancement region 402 may have a diffraction feature F3B, having a grating period d3B and an orientation β3B (with respect to the reference direction SX).

The enhancement regions 401 and 402 may be implemented by cross-shaped gratings, e.g. crossed gratings or two linear gratings. The first linear grating G3A has the feature F3A and may be provided on a first side of the waveguide plate 201 (e.g. SRF1), and the second linear grating G3 has the feature F31 and may be provided on a second side of the plate 201 (e.g. SRF2).

The enhancement regions 401 and 402 may have a high output coupling efficiency for diffracting and coupling the guided light B3 out of the waveguide plate 201, and the enhancement regions 401 and 402 may have a high output coupling efficiency for coupling the guided light B4 out of the waveguide plate 201.

The efficiency of the first enhancement region 401 for coupling light propagating in the first direction 301 to the viewing direction (300) may be about 50% or more of the efficiency of the first enhancement region 401 for coupling light propagating in the second direction 302 to the viewing direction (300).

L14 represents a distance between the unit 202 and the unit 205. The distance L14 may be 50% to 80% of the height h3 of the unit 204.

The position and size of the units 202, 204 and 205 can be set so that the second guided light (B2) does not interact with the coupling unit 204 between the entrance pupil unit 202 and the pupil expansion unit 203.

The pupil expansion device 2 may be designed to make the second guided light B2 propagate not via the diffraction exit pupil unit 204.

The first unit 202 may have a width w1 and a height h1. The second unit 203 may have a width w2 and a height h2. The third unit 204 may have a width w3 and a height h3. The fourth unit 205 may have a width w4 and a height h4. The width represents the size in the direction SX and the height represents the size in the direction SY The exit pupil unit 204 may be rectangular. The edges of the diffraction exit pupil unit 204 are in the directions SX and SY, respectively.

The width W2 of the pupil expansion unit 203 is much greater than the width w1 of the entrance pupil unit 202. The width of the expanded guided light beam B3 is much greater than the width of the input light beam IN1.

803 represents the center point of the diffraction exit pupil unit 204. A position 800 represents the position of the diffraction exit pupil unit 204 closest to the unit 202. A position 801 may be the furthest corner region 6 of the exit pupil unit 204. The horizontal distance between the positions 800 and 801 may be, for example, 90% of the width w3 of the diffraction exit pupil unit 204. The vertical distance between the positions 800 and 801 may be, for example, 90% of the height h3 of the diffraction exit pupil unit 204. A position 802 is located at a position of the second corner region 7 closest to the bypass unit 205.

The waveguide plate 201 may be made from a transparent solid material. The waveguide plate 201 may be made from, for example, glass, polycarbonate or polymethyl methacrylate (PMMA) or the like. The diffraction optical units 202, 203, 204 and 205 may be formed, for example, by molding, embossing and/or etching, holographic exposure, etc. The units 202, 203, 204 and 205 may be implemented, for example, by one or more surface diffraction gratings or by one or more volume holographic diffraction gratings.

In one embodiment, the input light IN1 may be substantially monochromatic or have different input wavelengths λ0. All the light beams IN1, B1, B2, B3, B4, OUT1, OB3 and AUX1 may have the same wavelength λ0.

The spatial distribution of the diffraction efficiency can be controlled by selecting local parameters of microscopic diffraction features F. The uniformity of the intensity distribution of the output light OUT1 can be further improved by controlling the parameters of the microscopic diffraction features F of the exit pupil unit 204.

The display apparatus 500 may be a virtual reality device 500 or an augmented reality apparatus 500. The display apparatus 500 may be a near-eye apparatus or may be a wearable apparatus, such as a headset. The device 500 may be used for, for example, a headband, and by the headband, the device 500 may be worn on the head of a user. In use, the diffraction exit pupil unit 204 of the device 500 is placed in front of the left eye 5 or right eye 5 of the user. The device 500 may project the output light OUT1 into the eye 5 of the user. In one embodiment, the apparatus 500 may include two engines 10 and/or two pupil expansion devices 2 to display stereoscopic images. For the augmented reality device 500, a viewer can see not only the virtual image displayed by the pupil expansion device 2, but also the real object and/or environment. The engine 10 may generate still images and/or videos. The engine 10 may generate a real main image IMG0 from a digital image. The engine 10 may receive one or more digital images from an Internet server or from a smartphone. The device 500 may be a smartphone. The displayed image may be seen by a person, and the displayed image may also, for example, be viewed by an animal or a machine (which may include, for example, a camera).

Finally, it should be noted that: the above description is only preferred embodiments of the present disclosure and is not intended to limit the present disclosure. Although the present disclosure is described in detail with reference to the foregoing embodiments, a person of skill in the art can still make modifications to the technical solutions described in the foregoing embodiments, or make equivalent replacements to some of the technical features. Any modification, equivalent replacement, or improvement made within the spirit and principle of the present disclosure shall fall within the protection scope of the present disclosure.

## Claims

1. An optical device (2), comprising:
a waveguide plate (201) which comprises:
a diffraction entrance pupil unit (202) to form first guided light (B1) and second guided light (B2) by diffracting input light (IN1);
a diffraction pupil expansion unit (203) to form third guided light (B3) by diffracting the first guided light (B1);
a diffraction exit pupil unit (204) to form first output light (OB3) by diffracting the third guided light (B3); and
a bypass unit (205) to form fourth guided light (B4) by diffracting the second guided light (B2);
wherein the first guided light (B1) propagates in a first direction (301), the second guided light (B2) propagates in a second direction (302), and an included angle (12) between the first direction (301) and the second direction (302) is in the range of 60° to 120°;
wherein the diffraction exit pupil unit (204) comprises one or more enhancement regions (401 and 402) to form auxiliary output light (AUX3) by diffracting the fourth guided light (B4).

2. The optical device according to Claim 1, wherein the diffraction exit pupil unit (204) comprises one or more regions (400), and the region (400) prevents the fourth guided light (B4) from being diffracted out of the waveguide plate (201).

3. The optical device according to Claim 2, wherein the propagation direction of the third guided light (B3) is a third direction (303) and is substantially parallel to the second direction (302); wherein the propagation direction of the fourth guided light (B4) is a fourth direction (304) and is substantially parallel to the first direction (301).

4. The optical device according to Claim 3, wherein the first enhancement region (401) forms the first output light (OB3) by diffracting the third guided light (B3), forms the auxiliary output light (AUX3) at the same time by diffracting the fourth guided light (B4), and forms combined output light (OUT1) by superimposing the auxiliary output light (AUX3) with the first output light (OB3).

5. The optical device according to Claim 4, wherein a distance (L14) between the entrance pupil unit (202) and the bypass unit (205) is in the range of 50% to 80% of a height (H3) of an output coupling region (204); a device of the second guided light (B2) between the entrance pupil unit (202) and the pupil expansion unit (203), does not interact with the diffraction exit pupil unit (204).

6. The optical device according to Claim 5, wherein the diffraction exit pupil unit (204) comprises one or more reference regions (400) which prevent the fourth guided light (B4) from being diffracted out of the waveguide plate (201), wherein the total area of the reference region (400) is between 30% and 95% of the area of the exit pupil unit (204).

7. The optical device according to Claim 6, wherein at least a part of the fourth guided light (B4) directly propagates from the bypass unit (205) to the first enhancement region (401) without passing through the reference region (400), without making the fourth guided light (B4) be diffracted from the waveguide plate (201).

8. A display apparatus (500), comprising an optical engine (10) to form a main image and convert the main image into multiple input light beams (IN1), the apparatus (500) comprises the optical device (2) according to any one of Claims 1 to 7, and forms an output light beam (OUT1) by diffracting and expanding the input light beam (IN1).

9. A method, comprising using the optical device (2) according to Claim 1 to provide output light (OUT1).

10. A method, comprising using the optical device (2) according to Claim 1 to display an image.
